# FASCICULE DE BREVET EUROPEEN

(11) **EP 1 103 444 B1**
(45) Date de publication et mention de la délivrance du brevet: **05.11.2003**
(21) Numéro de dépôt: 00420189.3
(22) Date de dépôt: 11.09.2000
(51) Int. Cl.: B62D 3/12

(54) **Agencement de poussoir pour carter en métal ou alliage léger de direction à crémaillère**
Druckstückanordnung für ein Zahnstangenlenkgetriebegehäuse aus Metall oder eine Leichtmetalllegierung
Yoke arrangement for rack-and-pinion steering gear housing from metal or light alloy

(30) Priorité: 25.11.1999 FR 9914857
(43) Date de publication de la demande: 30.05.2001
(73) Titulaire: Société de Mécanique d'Irigny, 69540 Irigny (FR)
(72) Inventeur: Pantale, David, 69126 Brindas (FR)
(74) Mandataire: Bratel, Gérard

(56) Documents cités:
- FR-A- 2 663 284
- PATENT ABSTRACTS OF JAPAN vol. 1999, no. 05, 31 mai 1999 (1999-05-31) -& JP 11 048992 A (TOYOTA MOTOR CORP), 23 février 1999 (1999-02-23)

## Description

La présente invention concerne les directions à crémaillères, pour véhicules automobiles ; elle se rapporte, plus particulièrement, à l'agencement d'un dispositif dit "poussoir", monté dans le carter d'une telle direction, et ayant pour rôle de presser élastiquement la crémaillère contre le pignon, lié à la colonne de direction, avec lequel la crémaillère doit être maintenue en prise avec un effort contrôlé. Encore plus particulièrement, l'invention a pour objet un tel agencement de poussoir comme défini dans le préambule de la revendication 1, s'appliquant à un carter de direction à crémaillère réalisé en métal ou alliage léger, tel qu'aluminium ou alliage à base d'aluminium.

Pour obtenir un fonctionnement satisfaisant d'un mécanisme de direction à crémaillère, il est nécessaire de maintenir le pignon et la crémaillère en engrènement. A cet effet, dans la technique actuelle, il est fait appel à une pièce mobile appelée poussoir, combinée avec des moyens élastiques tels que rondelle élastique ou ressort, des exemples étant donnés par le brevet français N° 2.107.780 et par la demande de brevet européen N° 0860345. Ce dispositif permet un mouvement de la crémaillère et un effort de coulissement contrôlé de celle-ci, tout en corrigeant les jeux éventuels.

La demande de brevet français N° 2.663.284 qui montre un agencement selon le préambule de la revendication 1 décrit et illustre une réalisation particulière, dans laquelle la pièce poussoir traditionnelle est remplacée par deux doigts élastiques opposés, symétriques l'un de l'autre et moulés d'une seule pièce avec le carter, en matière synthétique. Les deux doigts élastiques, faisant ainsi partie intégrante du carter, viennent en appui sur la crémaillère à l'opposé de sa denture. Un bouchon, vissé sur le carter, comporte des prolongements flexibles dirigés vers l'intérieur du carter, qui appuient élastiquement les doigts précités sur la crémaillère, la force de pression étant réglable par le vissage du bouchon.

Comme il résulte de ce qui précède, une telle réalisation s'applique uniquement à une direction à crémaillère dont le carter est, lui-même, réalisé en matière synthétique, les doigts élastiques étant moulés d'une seule pièce avec ce carter. Or il existe aussi des directions à crémaillère dont le carter est réalisé en métal ou en alliage léger ; c'est le cas, notamment, des directions hydrauliques dont le carter doit pouvoir résister à l'huile chaude, les matières synthétiques habituellement utilisées ne supportant pas l'huile chaude. Egalement dans le cas de directions mécaniques ou électriques, l'utilisation d'un carter en métal ou alliage peut être obligatoire, quand par exemple les efforts auxquels est soumis le carter ne permettent pas une réalisation convenable en matière synthétique.

Partant de ce constat, la présente invention a pour but de fournir un agencement de poussoir, comparable par sa fonction aux dispositifs précédemment évoqués, notamment les dispositifs à doigts élastiques, mais applicable aux carters de direction réalisés en métal ou alliage léger.

A cet effet, l'invention à pour objet un agencement de poussoir pour carter de direction à crémaillère, visant à maintenir la crémaillère en prise avec le pignon, l'agencement comprenant deux doigts élastiques opposés portés par le carter et venant en appui sur la crémaillère à l'opposé de sa denture, ainsi qu'au moins un élément à action élastique, de préférence réglable en position, et venant en appui sur les doigts précités, le dispositif étant caractérisé en ce que, pour s'adapter à un carter en métal ou alliage léger, les deux doigts élastiques appartiennent à un insert en matière synthétique, mis en place et immobilisé dans ledit carter en métal ou alliage léger.

Dans une forme de réalisation préférée de l'invention, l'insert en matière synthétique, comportant les deux doigts élastiques, est un insert de forme générale tubulaire, mis en place et immobilisé dans un logement de forme générale cylindrique, ménagé dans le carter en métal ou alliage léger. Selon les configurations, l'insert est mis en place dans son logement par l'intérieur ou par l'extérieur.

Les deux doigts élastiques sont, notamment, rattachés à une même extrémité de l'insert tubulaire, dans deux zones diamétralement opposées de cet insert.

Avantageusement, l'insert tubulaire renferme, intérieurement, les ou les éléments à action élastique qui viennent en appui sur les deux doigts.

Dans l'ensemble, l'on obtient ainsi un agencement de poussoir compact, agissant sur la crémaillère par des doigts élastiques, alors que le carter lui-même reste en métal ou en alliage léger, rigide et supportant le contact de l'huile chaude.

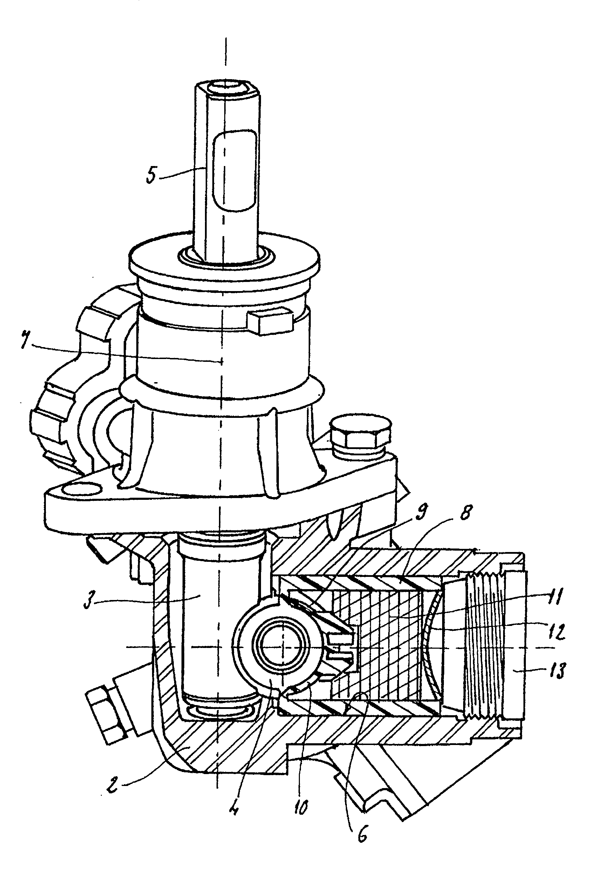

L'invention sera de toute façon mieux comprise à l'aide de la description qui suit, en référence au dessin schématique annexé représentant, à titre d'exemple, une forme d'exécution de cet agencement de poussoir pour carter en métal ou alliage léger de direction à crémaillère.

L'unique figure du dessin représente un carter de direction à crémaillère, vu en perspective avec coupe partielle au niveau du dispositif de poussoir.

Sur cette figure, le repère 2 désigne le carter central tubulaire d'une direction à crémaillère de véhicule automobile. On s'intéresse ici, plus particulièrement, à la partie de ce carter 2 qui renferme un pignon rotatif 3, en prise avec une crémaillère 4 coulissante, l'arbre 5 du pignon 3 sortant hors de cette partie du carter 2, et étant raccordé à la colonne de direction (non représentée) du véhicule concerné.

Le carter 2 est réalisé en métal ou alliage léger, notamment en aluminium, éventuellement en magnésium, qui lui donne sa rigidité et sa résistance. Ce carter 2 comporte, au niveau du pignon 3, un logement 6 de forme générale cylindrique et d'axe central perpendiculaire à l'axe 7 du pignon 3, logement qui est ouvert sur l'extérieur.

Dans le logement 6 est mis en place, et immobilisé, un insert 8 de forme générale tubulaire, réalisé en matière synthétique, par exemple en polyamide. A l'extrémité intérieure de l'insert 8, c'est-à-dire son extrémité la plus proche du pignon 3, et dans deux zones diamétralement opposés de cet insert 8, sont rattachés deux doigts élastiques 9 et 10, symétriques l'un de l'autre, et moulés d'une seule pièce avec ledit insert 8. Les deux doigts 9 et 10, ayant un profil intérieur arrondi, convergent l'un en direction de l'autre, un interstice étant ménagé entre les extrémités libres rapprochées de ces deux doigts 9 et 10.

Les deux doigts élastiques 9 et 10 s'appliquent, par leur profil intérieur arrondi, sur le dos de la crémaillère 4, à l'opposé de la denture de celle-ci. A cet effet, les deux doigts élastiques 9 et 10 sont sollicités élastiquement par des éléments à action élastique, logés à l'intérieur de l'insert tubulaire 8.

Dans l'exemple illustré au dessin, ces éléments comprennent une rondelle d'appui 11, sollicitée par une rondelle-ressort 12 insérée entre cette rondelle d'appui 11 et un bouchon vissable 13, lequel obture le logement 6. Sur son côté opposé à la rondelle-ressort 12, la rondelle 11 présente deux portées symétriques, qui viennent en appui, respectivement, sur des faces extérieures inclinées des doigts élastiques 9 et 10.

Le vissage ou le dévissage du bouchon 13, sur le filetage correspondant situé sur le carter 2 au débouché du logement 6, permet de régler sa position axiale et d'appuyer plus ou moins fortement la rondelle 11 sur les doigts 9 et 10. Ainsi, ces doigts 9 et 10 sont eux-mêmes plus ou moins resserrés, et sont pressés plus ou moins fortement contre la crémaillère 4, ce qui permet d'ajuster l'effort de résistance au coulissement de la crémaillère 4, tout en absorbant les jeux d'usure et les vibrations.

On notera aussi qu'en cas d'effort excessif de la crémaillère 4 sur les doigts 9 et 10, celle-ci viendrait directement en contact avec l'insert 8, ce qui permettrait d'absorber ledit effort, en permettant de plus le coulissement de la crémaillère 4 sur l'insert 8 sans risque de détérioration, et avec un coefficient de frottement approprié.

Grâce à l'insert 8 en matière synthétique et aux éléments associés à cet insert 8, l'on dispose d'un dispositif de poussoir à action élastique, tout en bénéficiant des avantages et possibilités d'application d'un carter 2 en métal ou en alliage. Ainsi, le dispositif de poussoir, précédemment décrit, s'applique plus particulièrement à des directions à crémaillère de type hydraulique.

L'on ne s'éloignerait pas du cadre de l'invention, telle que définie dans les revendications annexées, par des modifications de forme ou de matière du carter 2 et de l'insert 8, ou par le choix d'une autre configuration du ou des éléments à action élastique qui agissent sur les doigts élastiques 9 et 10. C'est ainsi, notamment, que la rondelle-ressort 12 pourrait être remplacée par tout autre élément élastique, éventuellement intégré dans la rondelle 11. Dans le même ordre d'idées, le dispositif de poussoir, objet de l'invention, est aussi applicable à des directions à crémaillère de type mécanique ou électrique.

## Revendications

1. Agencement de poussoir pour carter (2) de direction à crémaillère, visant à maintenir la crémaillère (4) en prise avec le pignon (3), l'agencement comprenant deux doigts élastiques opposés (9, 10) portés par le carter (2) et venant en appui sur la crémaillère (4) à l'opposé de sa denture, ainsi qu'au moins un élément (11, 12) à action élastique, de préférence réglable en position, et venant en appui sur les doigts (9, 10) précités, **caractérisé en ce que**, pour s'adapter à un carter (2) en métal ou alliage léger, les deux doigts élastiques (9, 10) appartiennent à un insert (8) en matière synthétique, mis en place et immobilisé dans ledit carter (2) en métal ou alliage léger.

2. Agencement de poussoir selon la revendication 1, **caractérisé en ce que** l'insert (8) en matière synthétique, comportant les deux doigts élastiques (9, 10), est un insert (8) de forme générale tubulaire, mis en place et immobilisé dans un logement (6) de forme générale cylindrique, ménagé dans le carter (2) en métal ou alliage léger.

3. Agencement de poussoir selon la revendication 2, **caractérisé en ce que** les deux doigts élastiques (9, 10) sont rattachés à une même extrémité de l'insert tubulaire (8), dans deux zones diamétralement opposées de cet insert (8).

4. Agencement de poussoir selon la revendication 2 ou 3, **caractérisé en ce que** l'insert tubulaire (8) renferme, intérieurement, le ou les éléments (11, 12) à action élastique qui viennent en appui sur les deux doigts (9, 10).

5. Agencement de poussoir selon l'une quelconque des revendications 1 à 4, **caractérisé par** son application à une direction à crémaillère (4) de type hydraulique.

## Patentansprüche

1. Druckanordnung für ein Gehäuse (2) einer Zahnstangenlenkung zum Aufrechterhalten des Eingriffs der Zahnstange (4) mit dem Ritzel (3), wobei die Anordnung zwei einander gegenüberliegende elastische Finger (9, 10), die von dem Gehäuse (2) getragen sind und die sich auf der Zahnstange (4) auf der ihrer Verzahnung gegenüberliegenden Seite abstützen, sowie mindestens ein Element (11, 12) mit elastischer Wirkung aufweist, dessen Position bevorzugt einstellbar ist und sich auf den genannten Fingern (9, 10) abstützt,
**dadurch gekennzeichnet,**
**daß** zur Anpassung an ein Gehäuse (2) aus Leichtmetall oder Leichtmetall-Legierung die beiden elastischen Finger (9, 10) zu einem Einsatz (8) aus Kunststoff gehören, der in dem Gehäuse (2) aus Leichtmetall oder Leichtmetall-Legierung angeordnet und festgelegt ist.

2. Druckanordnung nach Anspruch 1,
**dadurch gekennzeichnet,**
**daß** der Einsatz (8) aus Kunststoff, welcher die beiden elastischen Finger (9, 10) aufweist, ein Einsatz (8) mit einer im allgemeinen rohrförmigen Gestalt ist, der in einer Aufnahme (6) mit einer im allgemeinen zylindrischen Form, die in dem Gehäuse (2) aus Leichtmetall oder Leichtmetall-Legierung vorgesehen ist, angeordnet und festgelegt ist.

3. Druckanordnung nach Anspruch 2,
**dadurch gekennzeichnet,**
**daß** die beiden elastischen Finger (9, 10) an einem gleichen Ende des rohrförmigen Einsatzes (8) in zwei einander diametral gegenüberliegenden Bereichen dieses Einsatzes (8) angebracht sind.

4. Druckanordnung nach Anspruch 2 oder 3,
**dadurch gekennzeichnet,**
**daß** der rohrförmige Einsatz (8) in seinem Inneren das bzw. die Elemente (11, 12) mit elastischer Wirkung einschließt, die sich auf den beiden Fingern (9, 10) abstützen.

5. Druckanordnung nach einem der Ansprüche 1 bis 4,
**gekennzeichnet durch**
seine Anwendung auf eine Lenkung vom hydraulischen Typ mit Zahnstange (4).

## Claims

1. A pusher arrangement for a rack and pinion steering housing (2), intended to maintain the rack (4) in engagement with the pinion (3), said arrangement comprising two opposing elastic fingers (9, 10) borne by the housing (2) and bearing against the rack (4) opposite the teeth thereof, as well as at least one elastically acting element (11, 12), the position of which can preferably be adjusted and which bears on the aforementioned fingers (9, 10), **characterised in that**, in order to adapt to a housing (2) made of metal or light alloy, the two elastic fingers (9, 10) form part of an insert (8) made of a synthetic material which is installed and immobilised in said housing (2) made of metal or light alloy.

2. A pusher arrangement according to claim 1, **characterised in that** the synthetic material insert (8) which comprises the two elastic fingers (9, 10) is an insert (8) which is generally tubular in shape and which is installed and immobilised in a receiver (6) which is generally cylindrical in shape and which is disposed in said housing (2) made of metal or light alloy.

3. A pusher arrangement according to claim 2, **characterised in that** the two elastic fingers (9, 10) are attached to the same end of the tubular insert (8), in two diametrically opposite regions of said insert (8).

4. A pusher arrangement according to claim 2 or 3, **characterised in that** the tubular insert (8) internally encompasses the elastically acting element or elements (11, 12) which bear against the two fingers (9, 10).

5. A pusher arrangement according to any one of claims 1 to 4, **characterised by** its application to a rack (4) of the hydraulic type.
